# EUROPÄISCHE PATENTSCHRIFT

(11) **EP 2 430 508 B1**
(45) Veröffentlichungstag und Bekanntmachung des Hinweises auf die Patenterteilung: **17.09.2014**
(21) Anmeldenummer: 10717148.0
(22) Anmeldetag: 05.05.2010
(51) Int. Cl.: G05G 5/03, G05G 1/30

(54) **KOMPAKTES PEDALSYSTEM FÜR EIN KRAFTFAHRZEUG**
COMPACT PEDAL SYSTEM FOR A MOTOR VEHICLE
SYSTÈME DE PÉDALE COMPACT POUR UN VÉHICULE À MOTEUR

(30) Priorität: 15.05.2009 DE 102009021585
(43) Veröffentlichungstag der Anmeldung: 21.03.2012
(73) Patentinhaber: Conti Temic Microelectronic GmbH, 90411 Nürnberg (DE)
(72) Erfinder: LEONE, Carmelo, 85354 Freising (DE); DREWS, Frank, 90552 Röthenbach (DE); BÄUMLER, Jürgen, 90762 Fürth (DE); BRANDT, Thomas, 92265 Edelsfeld (DE)
(86) Internationale Anmeldenummer: PCT/EP2010/056064
(87) Internationale Veröffentlichungsnummer: WO 2010/130605

(56) Entgegenhaltungen:
- EP-A1- 1 375 233
- EP-A2- 1 602 520
- DE-A1- 19 916 434
- DE-A1-102004 025 829
- JP-A- 5 231 194
- US-A1- 2002 153 792

## Beschreibung

Die Erfindung betrifft ein kompaktes Pedalsystem für ein Kraftfahrzeug gemäß dem Oberbegriff des Anspruchs 1.

In der Automobilindustrie besteht der Trend, den Fahrzeuglenker hinsichtlich Fahrsicherheit und Fahrkomfort sowie Fahreffizienz zu unterstützen. Beispiele dafür sind Spurhaltesysteme oder Systeme mit Tempomatfunktion. Dabei wird das Fahrverhalten des Kraftfahrzeugs auf Grund gemessener Fahrzeug- und Umgebungsparameter unterstützend beeinflusst. Die Kräfte, die hierzu aufgebracht werden müssen, werden zum Großteil von elektromechanischen Systemen, wie Elektromotoren, aufgebracht.

Beispielweise fungieren so genannte Force-Feedback-Systeme bei der Geschwindigkeitsbeeinflussung insbesondere gleichzeitig als Geschwindigkeitsregler, Geschwindigkeitsbegrenzer und bei der Überschreitung eines vorgegebenen Geschwindigkeitswertes als Warneinrichtung. Dabei wirkt der Kraft, die vom Fahrerfuß zum Zweck der Geschwindigkeitserhöhung auf das Gaspedal ausgeübt wird, eine zusätzliche Rückstellkraft entgegen. Die Höhe der zusätzlichen Rückstellkraft kann von der Höhe der Abweichung vom Geschwindigkeitssollwert abhängen.

Eine derartige Vorrichtung ist aus der EP 0 617 674 B1 bekannt. Die Vorrichtung für die Steuerung der Leistung von Motoren, insbesondere von Kraftfahrzeugmotoren umfasst einen Servomotor zur Kraftregelung, um auf das durch den Fahrer direkt betätigte Organ zur Leistungsregelung, beispielsweise ein Gaspedal, über eine mechanische Verbindung eine gesteuerte Rückstellkraft auszuüben. Diese durch eine mechanische Verbindung übertragene Kraft wird von einer Feder erzeugt, die einem Dreieckspunktmechanismus zugeordnet ist, bei dem ein Motor die Kraftkomponenten verlagert, die auf das Ausgangsorgan des Servomotors einwirken.

Eine derartige Vorrichtung zur Steuerung der Geschwindigkeit eines Fahrzeugs besteht aus einer Vielzahl eigenständiger Bauteile, die mit großem Aufwand montiert und aufeinander abgestimmt werden müssen. Die auf das Pedal wirkende Rückstellkraft wird unter Aufwendung eines komplizierten Umlenkmechanismusses erzeugt. Dadurch gestaltet sich sowohl die Herstellung als auch die Kalibrierung der Vorrichtung sehr aufwändig,

Aus der DE 10 2004 025 829 B4 ist eine Force-Feedback-Vorrichtung bekannt, wobei die Rückstellkraft mittels eines Torque-Motors aus einem Stator und einem Rotor erzeugt wird. Der Rotor ist scheibenförmig ausgestaltet und mittels eines exzentrisch am Rotor angeordneten Stößelelements mit dem Pedalhebel derart gekoppelt, dass das Stößelelement am Pedalhebel nur anliegt und auf diesen bei Drehung des Rotors nur entgegen der Betätigungsrichtung des Pedalhebels eine Rückstellkraft ausüben kann.

Nachteilig an dieser Vorrichtung ist, dass bei Ausübung der Rückstellkraft auf den Pedalhebel durch den Rotor auf die Rotorwelle direkt ein relativ großes Biegemoment wirkt. Dadurch wird in der Regel der Luftspalt zwischen Stator und Rotor verändert und die Ansteuerbarkeit des Torquemotors negativ beeinflusst.

Es ist daher die Aufgabe der vorliegenden Erfindung, ein einfaches, wenige Bauteile umfassendes, kompaktes und vor allem robustes Pedalsystem für den Einsatz in einem Kraftfahrzeug derart bereitzustellen, dass sowohl Material- und Herstellungskosten, als auch der benötigte Bauraum gering sind , sowie eine hohe Funktionssicherheit gewährleistet ist.

Diese Aufgabe wird erfindungsgemäß gelöst durch die Merkmale des Anspruchs 1. Vorteilhafte Weiterbildungen sind Gegenstand der auf den Anspruch 1 unmittelbar oder mittelbar rückbezogenen Ansprüche.

Die Erfindung beschreibt ein kompaktes Pedalsystem für den Einsatz in einem Kraftfahrzeug mit einem Gehäuse und mit einer im Gehäuse integrierten Kraftrückstellungseinrichtung. Die zusätzliche Rückstellkraft auf den Pedalhebel, in Richtung dessen Nulllage, wird insbesondere durch Bestromen eines Elektromotors erzeugt. Der Elektromotor umfasst einen Stator und einen auf einer Welle angeordneten Rotor. Zusätzlich ist auf der Welle des Elektromotors eine Antriebsscheibe angeordnet, die mittels einer an der Antriebsscheibe exzentrisch angeordneten Antriebsrolle die Rückstellkraft auf den Pedalhebel ausüben kann. Insbesondere ist der Stator auf der Welle des Elektromotors zwischen dem Rotor und der Antriebsscheibe angeordnet. Dies hat den Vorteil, dass die Auswirkung des Biegemoments auf den Rotor, das bei Ausübung der Rückstellkraft auf den Pedalhebel durch die Antriebsscheibe auf die Welle einwirkt, gering ist, da der Rotor auf der der Antriebsscheibe gegenüberliegenden Seite des Stators angeordnet ist. Auf Grund dieser Anordnung wird der Luftspalt zwischen Stator und Rotor nicht verändert und die Ansteuerbarkeit des Elektromotors wird nicht beeinträchtigt.

Dadurch, dass das Radiallager, mittels dessen die Welle im Stator gelagert ist, sich weitestgehend über die gesamte Länge des Stators erstreckt, können relativ große Radialkräfte, die über die Welle auf den Elektromotor wirken , wenn eine Rückstellkraft auf den Pedalhebel ausgeübt wird, kompensiert werden. Das Radiallager ist beispielsweise als Kunststoffgleitlager ausgestaltet und im Stator verpresst.

Der Pedalhebel ist zur Umsetzung des Fahrerwunsches in Geschwindigkeit um einen Drehpunkt schwenkbar, und zwar von der Nulllage des Pedalhebels, was bedeutet, das die Drehzahl des Fahrzeugmotors die Leerlaufdrehzahl ist, bis zu einer Endlage des Pedalhebels, was Vollgas bedeutet. Am Pedalhebel ist eine Pedalrückholfeder derart angeordnet, dass der Pedalhebel in seine Nulllage gedrückt wird, das heißt, dass, wenn der Fahrzeuglenker den Fuß vom Pedalhebel nimmt, der Fahrzeugmotor zwangsläufig mit der Leerlaufdrehzahl dreht. Der Elektromotor ist um einen Drehpunkt von einer Nulllage des Elektromotors bis zu einer Endlage des Elektromotors schwenkbar. Der Drehpunkt des Pedalhebels und der Drehpunkt des Elektromotors können auch identisch sein. Am Elektromotor ist eine Motorrückholfeder derart angeordnet, dass die Antriebsscheibe des Elektromotors über die Antriebsrolle den Pedalhebel ebenfalls in Richtung von dessen Nulllage drückt, insbesondere wenn der Elektromotor nicht bestromt ist. Die Pedalrückholfeder und Motorrückholfeder können entweder linear, zum Beispiel als Spiralfeder, oder rotatorisch als Torsions- oder Schenkelfeder ausgeführt sein. Dabei ist in der Regel jeweils ein Ende der Feder fest mit dem Gehäuse verbunden. Das andere Ende der Feder wirkt auf den Pedalhebel beziehungsweise auf die Antriebsscheibe. Dadurch dass der Winkelbereich, der durch die jeweilige Nulllage und Endlage der Feder bestimmt ist, bei der Motorrückholfeder sowohl in der Nulllage als auch in der Endlage größer ist als bei der Pedalrückholfeder, ist gewährleistet, dass die Antriebsscheibe über die Antriebsrolle zu jeder Zeit am Pedalhebel anliegt, das heißt, zumindest im unbestromten Zustand des Elektromotors immer vorgespannt ist. Zur Ansteuerung des Elektromotors, insbesondere durch eine im Pedalsystem integrierte Steuereinheit, ist es von Vorteil, die jeweilige Winkellage sowohl des Pedalhebels als auch des Elektromotors jeweils durch einen entsprechenden Sensor zu erfassen.

Vorzugsweise wird das Hsytereseelement des Pedalsystems durch eine Gleitbuchse im Drehpunkt des Pedalhebels gebildet. Die Funktion der Gleitbuchse kann insbesondere auch durch eine geeignete Materialpaarung der Materialien des Pedalhebels und der Welle, auf der der Pedalhebel angeordnet ist, realisert werden. Diese Materialpaarungen können über den gesamten Umfang der definierten Reibflächen erhaben sein, beispielsweise jeweils über 120° angeordnet.. Diese erhabenen Flächen können sowohl am Pedalhebel, als auch am Gehäuse angebracht sein.

In bestimmten Fällen kann es nötig sein, dass der Fahrzeuglenker die gesamte Rückstellkraft, die der Pedalhebel durch Bestromung des Elektromotors insbesondere in Gefahrensituationen, wie zu geringem Abstand zum vorausfahrenden Fahrzeug, erfährt, übertreten muss, um beispielsweise einen Überholvorgang einzuleiten. Zu diesem Zweck kann das Pedalsystem eine Überlastkupplung aufweisen. Vorzugsweise ist diese Überlastkupplung als Rutschkupplung zwischen Antriebsscheibe und Rotor angeordnet. Dabei wird zum Beispiel über ein Federpaket in der Rutschkupplung eine axiale Kraft aufgebracht, die im Normalzustand größer ist als die Betätigungskraft des Fußes des Fahrzeuglenkers auf den Pedalhebel. Zum Zweck der Überwindbarkeit ist die Rutschkupplung frei drehbar auf der Welle des Elektromotors angeordnet. In der Regel kann der Elektromotor selbst auch übertreten werden, ohne Schaden zu nehmen.

Für den Fall, dass der Elektromotor aufgrund eines Defekts, zum Beispiel durch Überhitzung, blockiert, kann in dem Pedalsystem am Elektromotor ein Notfallmittel angeordnet sein, mittels dem bei einer Blockade des Elektromotors die Rückstellkraft auf den Pedalhebel durch den Fahrzeugführer überwunden werden kann. Ein derartiges Notfallmittel kann zum Beispiel durch eine Verzahnung an der Antriebsscheibe und eine in diese Verzahnung eingreifende entsprechende Verzahnung auf der Außenfläche der Welle des Elektromotors, im Bereich der Antriebsscheibe, realisiert sein. Im Normalzustand geschieht die Kraftübertragung vom Elektromotor auf den Pedalhebel über diese ineinander greifenden Verzahnungen. Im Notfall wird diese Verzahnung durch Übertreten zerstört und die Rückstellkraft durch den Elektromotor auf den Pedalhebel aufgehoben. Ein derartiges Notfallmittel kann vor allem bei solchen Pedalsystemen zum Einsatz kommen, bei denen aus Platzgründen auf eine Überlastkupplung verzichtet werden muss.

Bei niedrigen Außentemperaturen können die Reibungsverluste im Elektromotor und auch im Pedalhebel gegenüber Normaltemperaturen verstärkt sein. Um eine derartige Erhöhung der Reibung zu vermeiden, kann der Elektromotor in bestimmten Zeitabständen kurzzeitig bestromt werden, wobei die Zeitabstände willkürlich oder durch die Steuereinheit vorgegeben sein können. Wenn in einer Notsituation, zum Beispiel bei einem Verkehrsunfall, der Fuß des Fahrzeuglenkers bei einer Vollgasfahrt den Kontakt zum Pedalhebel verliert, muss aus Sicherheitsgründen gewährleistet sein, dass der Pedalhebel innerhalb einer vorgeschriebenen Zeit in seine Nulllage gebracht wird, um die Motordrehzahl rasch auf die Leerlaufdrehzahl abzusenken. Im Normalfall drücken sowohl die Pedalrückholfeder als auch die Motorrückholfeder den Pedalhebel schnell genug in seine Nulllage. Bei bestimmten Ausführungen des Pedalsystems ist die Motorrückholfeder relativ schwach ausgelegt, um insbesondere eine große Pedalkennlinienvielfalt zu ereichen. Bei einer Fehlfunktion der Pedalrückholfeder, zum Beispiel durch Bruch, könnte die Motorrückholfeder alleine zu schwach sein, um den Pedalhebel in der vorgeschriebenen Zeit in die Nulllage zu bringen. In solchen Fällen ist es notwendig, die Funktion der Pedalhebelrückholfeder durch ein separates Überwachungselement zu überwachen. Dies könnte zum Beispiel auf eine einfache Weise durch einen mechanischen Druckschalter realisiert werden, auf den im Normalfall ein Ende der Pedalhebelrückholfeder ständig einen Druck ausübt. Bricht die Pedalhebelrückholfeder, so löst der Druckschalter ein entsprechendes Warnsignal an den Fahrzeuglenker aus bzw. ein Signal an die Steuereinheit aus, um über den Elektromotor die notwendige zusätzliche Rückstellkraft auf den Pedalhebel auszuüben.

Der Einfachheit halber kann die Motorrückholfeder als Schenkelfeder ausgestaltet sein, die zwischen dem Stator und der Antriebsscheibe angeordnet ist. Die Drehpunkte der Schenkelfeder und der Antriebsscheibe können in der Achse der Welle des Elektromotors liegen. Dabei ist der eine Schenkel der Schenkelfeder vorzugsweise mit dem Gehäuse fest verbunden bzw. am Gehäuse angelenkt und der andere Schenkel drückt gegen die Antriebsscheibe.

Als Elektromotor kann zum Beispiel ein bürstenloser Gleichstrommotor verwendet werden. Um einen Gleichstrommotor mit geringer Baugröße und geringer Leistungsaufnahme verwenden zu können, wird meist zusätzlich ein selbsthemmendes Getriebe zur Krafterhöhung eingesetzt, was den Vorteil hat, dass nach Erreichen einer vorgegebenen Rückstellkraft durch den Gleichstrommotor, dieser in einen stromlosen Zustand versetzt werden kann und die Rückstellkraft durch die selbsthemmende Wirkung des Getriebes beibehalten wird. Das selbsthemmende Getriebe ist dann vorteilhafterweise zwischen der Antriebsscheibe und dem Rotor angeordnet und zur Kraftübertragung fest mit der Welle des Elektromotors verbunden. In diesem Fall ist die Antriebsscheibe auf der Welle des Elektromotors frei drehbar gelagert. Das eine Ende der Motorrückholfeder wirkt auf die Antriebsscheibe, das andere Ende der Motorrückholfeder ist mit dem selbsthemmenden Getriebe fest verbunden. Dadurch kann die Vorspannung der Motorrückholfeder sowohl in Richtung der Nulllage als auch in Richtung der Endlage des Elektromotors zwischen einem Minimalwert und einem Maximalwert variiert werden.

Weitere Vorteile und Merkmale der Erfindung ergeben sich aus der nachfolgenden Beschreibung mehrerer Ausführungsbeispiele der Erfindung anhand der Zeichnungen. Es zeigen:
- Fig. 1: ein Pedalhebelsystem mit Pedalhebel, Elektromotor und Steuereinheit,
- Fig. 2: eine Anordnung von Stator und Rotor nach dem Stand der Technik,
- Fig. 3: eine Anordnung von Stator und Rotor gemäß der Erfindung,
- Fig. 4: ein Pedalhebelsystem mit einem Pedalhebel in seiner Nulllage,
- Fig. 5: ein Pedalhebelsystem mit einem Pedalhebel in seiner Endlage,
- Fig. 6: eine dreidimensionale Ansicht des Pedalhebelsystems und
- Fig. 7: ein Pedalhebelsystem, wobei der Bereich der Pedalrückholfeder und ein Teilbereich des Rotors im Ausbruch sichtbar ist.

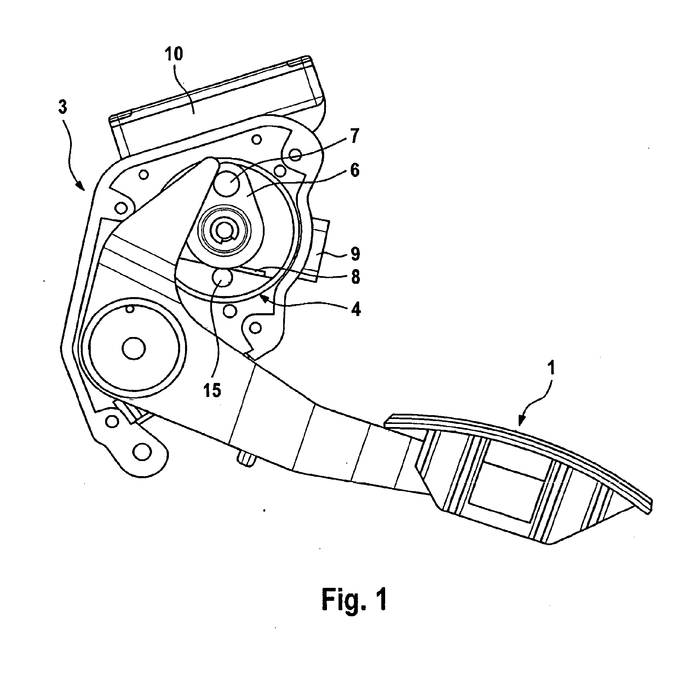

Fig. 1 zeigt ein kompaktes Pedalsystem zur Geschwindigkeitsregulierung, wobei eine Kraftrückstellungseinrichtung im Gehäuse 3 integriert ist. Das Pedalsystem umfasst im Wesentlichen einen Pedalhebel 1 zur Umsetzung des Fahrerwunsches in Geschwindigkeit. Ein Elektromotor 4, insbesondere ein Torque-Motor als weitere Komponente der Kraftrückstellungseinrichtung kann im bestromten Zustand eine Rückstellkraft auf den Pedalhebel 1 in Richtung einer Geschwindigkeitsverminderung ausüben. Am Elektromotor 4 ist eine Antriebsscheibe 6 drehbar angeordnet, die mittels einer Antriebsrolle 7 oder andere geeignete Vorrichtungen, wie z.B. gleitende Freiformflächen, die Rückstellkraft auf den Pedalhebel 1 ausüben kann. Eine Steuereinheit 10 zur Steuerung des Elektromotors 4 ist ebenfalls im Gehäuse 3 integriert.

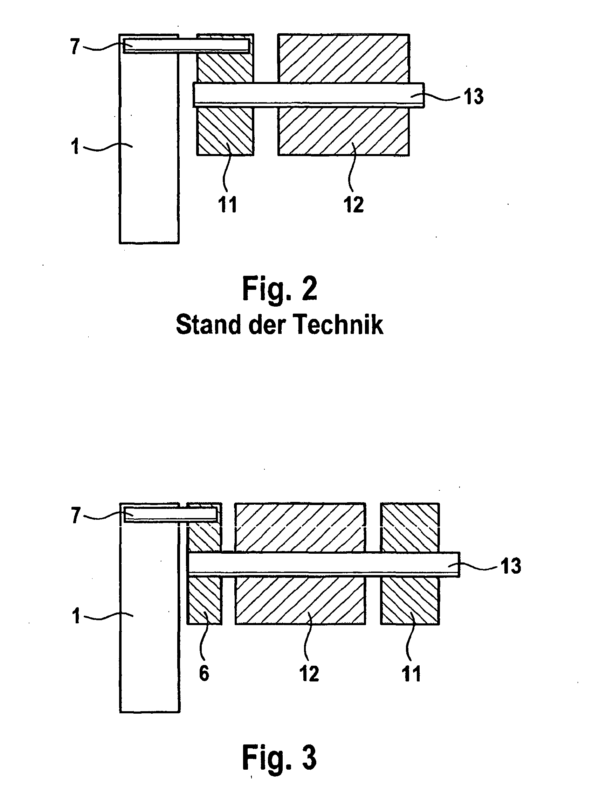

Der Elektromotor 4 umfasst im wesentlichen einen Stator 12 und einen mit einer im Stator 12 drehbaren Welle 13 verbundenen Rotor 11. Fig. 2 und 3 zeigen jeweils eine prinzipielle Anordnung der Komponenten des Eletromotors 4. Fig. 2 zeigt einen Elektromotor 4 gemäß der DE 10 2004 025 829 B4. Die Antriebsrolle 7, die bei Bestromung des Elektromotors 4 die Rückstellkraft auf den Pedalhebel 1 ausübt, ist direkt am Rotor 11 angebracht. Die auf den Pedalhebel 1 einwirkende Kraft hat wiederum ein als Biegemoment auf die Welle 13, in Richtung senkrecht zur Achse der Welle 13, wirkendes Drehmoment zur Folge. Dadurch kann es zu Änderungen des Luftspalt zwischen dem Rotor 11 und Stator 12 kommen und die Ansteuerbarkeit des Elektromotors 4 kann beeinträchtigt werden.

Fig. 3 zeigt die Anordnung der Komponenten des Elektromotors 4 gemäß der Erfindung. Der Stator 12 ist auf der Welle 13 zwischen dem Rotor 11 und der Antriebsscheibe angeordnet. Die Antriebsrolle 7, die bei Bestromung des Elektromotors 4 die Rückstellkraft auf den Pedalhebel 1 ausübt, ist hier an der Antriebsscheibe angeordnet, zum Beispiel verschraubt oder verpresst. Der Einfluss des Biegemoments auf den Luftspalt zwischen dem Rotor 11 und dem Stator 12, das bei Ausübung der Rückstellkraft auf die Welle 13 des Elektromotors 4 wirkt, ist in diesem Fall in der Regel wesentlich kleiner als bei der in Fig. 2 gezeigten Anordnung. Die Funktionsfähigkeit des Elektromotors 4 ist demnach bei dieser Anordnung auch bei höheren Rückstellungskräften gewährleistet.

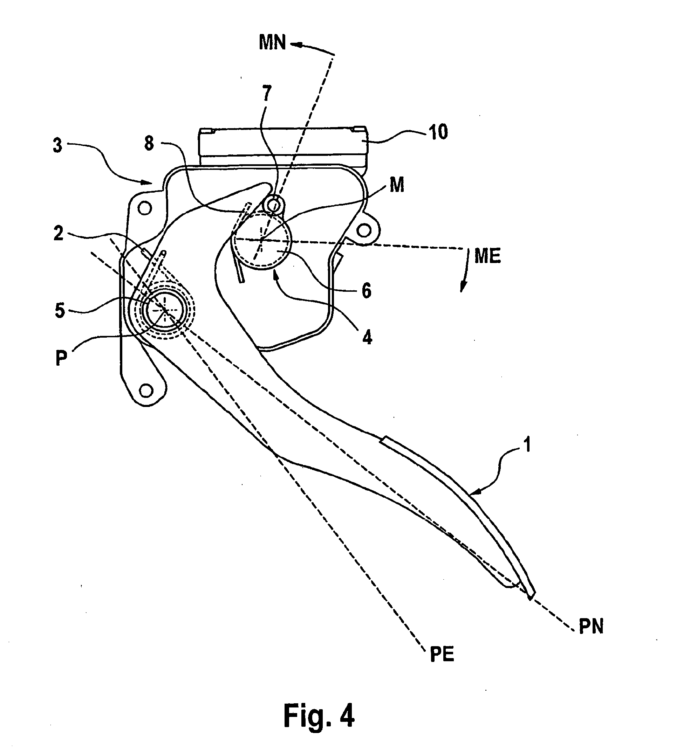

Fig. 4 zeigt ein Pedalsystem mit einem Pedalhebel 1 in seiner Nulllage PN. Das heißt, der Fuß des Fahrzeuglenkers auf den Pedalhebel 1 übt keine Kraft in Richtung Geschwindigkeitserhöhung aus und der Motor des Fahrzeugs dreht mit der Leerlaufdrehzahl. Der Pedalhebel 1 ist um den Drehpunkt P schwenkbar, und zwar von einer Nulllage PN bis zur Endlage PE, was in Motordrehzahl übersetzt heißt, von Leerlauf bis Vollgas. In diesem Fall ist im Drehpunkt P des Pedalhebels 1 eine Schenkelfeder als Pedalrückholfeder 2 derart angeordnet, dass sie den Pedalhebel 1 in seine Nulllage PN drückt. Alternativ wäre auch eine linear wirkende Feder als Pedalhebelrückholfeder 2 insbesondere außerhalb des Drehpunkts P denkbar. Der Elektromotor 4 ist um seinen Drehpunkt M schwenkbar, und zwar von seiner Endlage ME bis zu seiner Nulllage MN. Im beschriebenen Fall sind die Drehpunkte P und M des Pedalhebels 1 und des Elektromotors 4 örtlich getrennt. Es wäre aber durchaus ein Pedalsystem möglich, bei dem die beiden Drehpunkte P und M zusammenfallen.

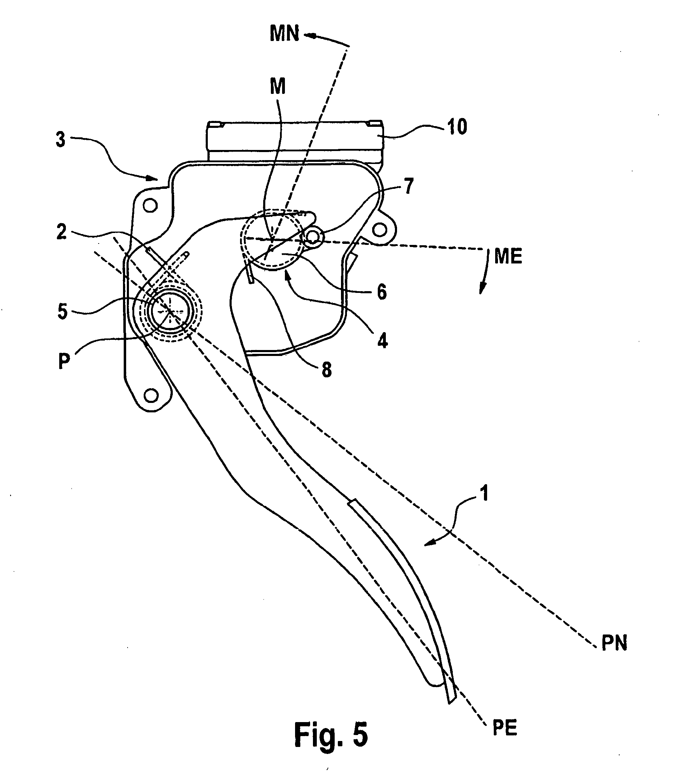

Am Elektromotor 4 ist eine Motorrückholfeder 8 derart angeordnet, dass die Antriebsscheibe 6 des Elektromotors 4 mittels der Antriebsrolle 7 den Pedalhebel 1 ebenfalls in Richtung von dessen Nulllage PN drückt, insbesondere wenn der Elektromotor 4 nicht bestromt ist. Dabei ist hier jeweils ein Ende der Pedalrückholfeder 2 bzw. Motorrückholfeder 8 zumindest in Druckrichtung der Feder fest mit dem Gehäuse 3 verbunden. Hier ist das eine Ende der Motorrückholfeder 8 an den Zapfen 15 des Gehäuses 3 angelenkt. Das andere Ende der Pedalrückholfeder 2 wirkt auf den Pedalhebel 1 beziehungsweise das der Motorrückholfeder 8 auf die Antriebsscheibe. Der Winkelbereich, der durch die jeweilige Nulllage MN, PN und Endlage ME, PE der Federn 2, 8 bestimmt ist, ist bei der Motorrückholfeder 8 sowohl bezüglich der Nulllage MN als auch bezüglich der Endlage ME größer als bei der Pedalrückholfeder 2. Dies ist auch in Fig. 4 und Fig. 5 jeweils durch Pfeile in Richtung MN und ME angedeutet. Dadurch ist gewährleistet, dass die Antriebsscheibe 6 über die Antriebsrolle 7 zu jeder Zeit am Pedalhebel 1 anliegt. Das heißt, dass die Motorrückholfeder 8 zumindest im unbestromten Zustand des Elektromotors 4 immer vorgespannt ist.

Zur Ansteuerung des Elektromotors 4, insbesondere durch eine im Pedalsystem integrierte Steuereinheit 10, ist es von Vorteil, die jeweilige Winkellage sowohl des Pedalhebels 1 als auch des Elektromotors 4 jeweils durch einen entsprechenden Sensor, beispielsweise einen Hallsensor zu erfassen. Entsprechende Sensoren sind in den Figuren jedoch nicht gezeigt.

Fig. 5 entspricht Fig.4, mit dem einen Unterschied, dass der Pedalhebel 1 sich in seiner Endlage PE befindet. Die Endlage ME des Elektromotors 4 ist aber noch nicht erreicht, was wiederum durch den Pfeil in Richtung ME angedeutet ist. Das heißt, durch entsprechende Bestromung des Elektromotors 4 wäre es möglich, den Elektromotor 4 in Richtung seiner Endlage zu weiter zu bewegen und somit vom Pedalhebel 1 abzuheben.

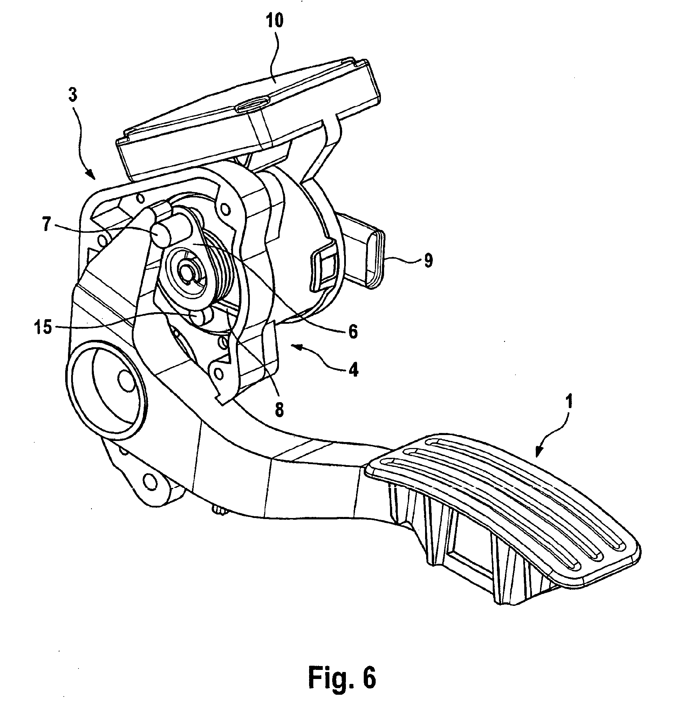

Fig. 6 zeigt ein Pedalsystem in dreidimensionaler Ansicht. Als Elektromotor 4 ist hier beispielsweise ein bürstenloser Gleichstrommotor mit selbsthemmendem Getriebe eingesetzt. Das selbsthemmende Getriebe ist in nicht gezeigter Weise zwischen der Antriebsscheibe 6 und dem Rotor 11 angeordnet und fest mit der welle 13 verbunden. In diesem Fall ist die Antriebsscheibe 6 auf der Welle 13 frei drehbar gelagert. Das eine Ende der Motorrückholfeder 8 wirkt auf die Antriebsscheibe 6. Auf das andere Ende der Motorrückholfeder 8 übt das selbsthemmende Getriebe mittels des Zapfens 15 die Rückstellkraft aus. Dadurch kann die Vorspannung der Motorrückholfeder 8 sowohl in Richtung der Nulllage MN als auch in Richtung der Endlage ME des Elektromotors 4 zwischen einem Minimalwert und einem Maximalwert variiert werden.

Die Schnittstelle 9 umfasst die Stromversorgung der Leistungselektronik und somit die des Elektromotors 4 und den Austausch von Signalen zwischen der Steuereinheit und der Peripherie außerhalb des Pedalsystems über eine CAN Bus. Eine zweite, nicht gezeigte Schnittstelle ist aus Sicherheitsgründen ausschließlich der Signalübertragung des Sensors für die Winkellage des Pedalhebels 1 vorbehalten.

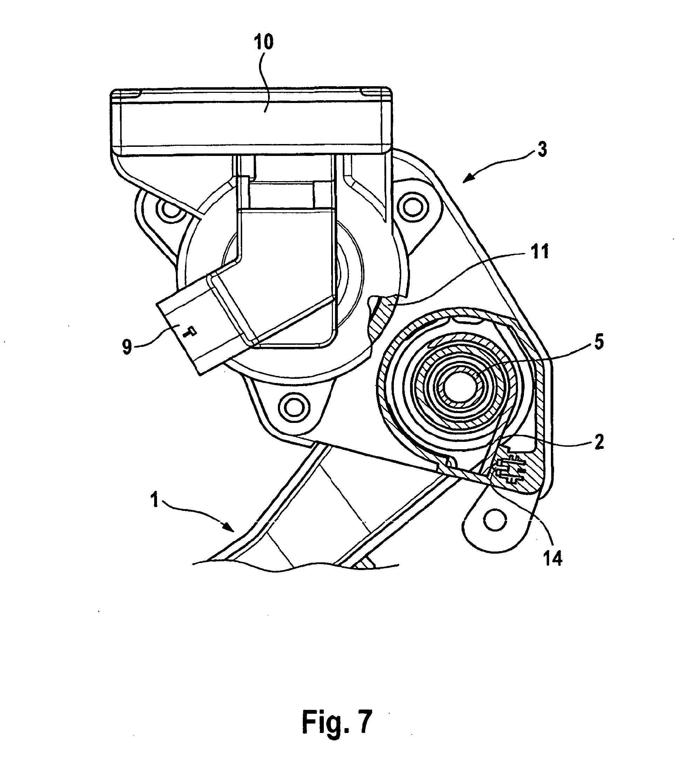

Fig. 7 zeigt das Pedalsystem aus der Fig. 6 von der dem Pedalhebel 1 gegenüber liegenden Seite, wobei speziell der Bereich der Pedalrückholfeder 2 und ein Teilbereich des Rotors 11 im Ausbruch sichtbar ist. Das eine Ende der Pedalrückholfeder 2 drückt auf das als Druckschalter ausgeführte Überwachungselement 14. Der Stromkreis im Druckschalter 14 kann offen oder geschlossen sein. Bei Versagen der Pedalrückholfeder 2, zum Beispiel durch Bruch der Feder, löst der Druckschalter 14 ein Signal aus, das den Fahrzeuglenker warnen kann bzw. ein Signal an die Steuereinheit 10 aussenden kann, um über den Elektromotor 4 eine zusätzliche Rückstellkraft auszuüben und dadurch die Motorrückholfeder 8 entsprechend vorzuspannen.

Dadurch ist sicher gestellt, dass in einer Notsituation, zum Beispiel bei einem Verkehrsunfall, wenn der Fuß des Fahrzeuglenkers insbesondere bei einer Vollgasfahrt den Kontakt zum Pedalhebel verliert, der Pedalhebel 1 innerhalb einer vorgeschriebenen Zeit in seine Nulllage PN gebracht wird, um die Motordrehzahl rasch auf die Leerlaufdrehzahl abzusenken. Normalerweise drücken sowohl die Pedalrückholfeder 2 als auch die Motorrückholfeder 8 den Pedalhebel 1 schnell genug in seine Nulllage zurück. Bei bestimmten Ausführungen des Pedalsystems ist die Motorrückholfeder 8 jedoch relativ schwach ausgelegt, um zum Beispiel eine große Pedalkennlinienvielfalt realisieren zu können. Bei einer Fehlfunktion der Pedalrückholfeder2, zum Beispiel durch Bruch, könnte die Motorrückholfeder 8 zu schwach sein, um den Pedalhebel 1 alleine in der vorgeschriebenen Zeit in die Nulllage PN zu bringen.

### Bezugszeichenliste:

- **1**: Pedalhebel
- **2**: Pedalrückholfeder
- **3**: Gehäuse
- **4**: Elektromotor
- **5**: Gleitlager
- **6**: Antriebsscheibe
- **7**: Antriebsrolle
- **8**: Motorrückholfeder
- **9**: Schnittstelle
- **10**: Steuereinheit
- **11**: Rotor
- **12**: Stator
- **13**: Welle des Elektromotors
- **14**: Überwachungselement
- **15**: Zapfen
- **M**: Drehpunkt des Elektromotors
- **MN**: Nulllage des Elektromotors
- **ME**: Endlage des Elektromotors
- **P**: Drehpunkt des Pedalhebels
- **PN**: Nulllage des Pedalhebels
- **PE**: Endlage des Pedalhebels

## Patentansprüche

1. Kompaktes Pedalsystem zur Geschwindigkeitsregulierung in einem Kraftfahrzeug mit einer in einem Gehäuse (3) integrierten Kraftrückstellungseinrichtung umfassend
- einen Pedalhebel (1) zur Umsetzung des Fahrerwunsches in Geschwindigkeit, wobei der Pedalhebel (1) um einen Drehpunkt (P) von einer Nulllage (PN) des Pedalhebels (1) bis zu einer Endlage PE des Pedalhebels (1) schwenkbar ist,
- eine Pedalrückholfeder (2), die den Pedalhebel (1) in seine Nulllage (PN) bringen kann,
- einen Elektromotor (4), der um einen Drehpunkt (M) von einer Nulllage (MN) des Elektromotors (4) bis zu einer Endlage (ME) des Elektromotors (4) schwenkbar ist, und der im bestromten Zustand eine Rückstellkraft auf den Pedalhebel (1) in Richtung von dessen Nulllage (PN) ausüben kann, wobei der jeweilige Drehsinn von Endlage (PE), (ME) in Nulllage (PN), (MN) für den Pedalhebel (1) und den Elektromotor (4) identisch ist,
- eine Antriebsscheibe (6), die mittels einer Welle (13) mit dem Elektromotor (4) verbunden ist und die mittels einer an der Antriebsscheibe (6) exzentrisch angeordneten Antriebsrolle (7) die Rückstellkraft auf den Pedalhebel (1) ausübt, wobei die Antriebsrolle (7) bei der Ausübung der Rückstellkraft (F) auf den Pedalhebel (1) am Pedalhebel (1) lediglich anliegt,
- eine Motorrückholfeder (8) zur Rückstellung des Elektromotors (4) in Richtung der Nulllage (MN) des Elektromotors (4),
- eine Steuereinheit (10) zur Steuerung des Elektromotors (4),
**dadurch gekennzeichnet, dass**
der Elektromotor (4) einen Rotor (11) und einen Stator (12) umfasst, wobei der Stator (12) auf der Welle (13) des Elektromotors (4) zwischen dem Rotor (11) und der Antriebsscheibe (6) angeordnet ist.

2. Kompaktes Pedalsystem nach Anspruch 1, **dadurch gekennzeichnet, dass** die Welle (13) mittels eines Radiallagers im Stator (12) gelagert ist, wobei sich das Radiallager weitestgehend über die gesamte Länge des Stators (12) erstreckt, um möglichst große Radialkräfte, die durch die Welle verursacht werden, wenn eine Rückstellkraft auf den Pedalhebel (1) ausgeübt wird, aufnehmen zu können.

3. Kompaktes Pedalsystem nach Anspruch 1 oder 2, **dadurch gekennzeichnet, dass** bei unbestromtem Elektromotor (4) die Pedalrückholfeder (2) und die Motorrückholfeder (8) den Pedalhebel (1) in Richtung seiner Nulllage (PN) drücken.

4. Kompaktes Pedalsystem nach einem der vorangehenden Ansprüche, **dadurch gekennzeichnet, dass** im Drehpunkt (P) des Pedalhebels (1) eine Gleitbuchse (5) als Hystereseelement angeordnet ist.

5. Kompaktes Pedalsystem nach einem der vorangehenden Ansprüche, **dadurch gekennzeichnet, dass** am Elektromotor (4) eine Überlastkupplung angeordnet ist, mittels der die Rückstellkraft durch den Fahrzeugführer übertretbar ist.

6. Kompaktes Pedalsystem nach einem der vorangehenden Ansprüche , **dadurch gekennzeichnet, dass** am Elektromotor (4) ein Notfallmittel angeordnet ist, mittels dem bei einer Blockade des Elektromotors die Rückstellkraft durch den Fahrzeugführer überwindbar ist.

7. Kompaktes Pedalsystem nach einem der vorangehenden Ansprüche, **dadurch gekennzeichnet, dass** bei niedrigen Außentemperaturen der Elektromotor (4) in durch die Steuereinheit (10) vorgegebenen oder in willkürlichen Zeitabständen kurzeitig bestrombar ist, wodurch die durch die niedrigen Außentemperaturen erhöhten Reibungsverluste im Elektromotor (4) und im Pedalhebel (1) kompensierbar sind.

8. Kompaktes Pedalsystem nach einem der vorangehenden Ansprüche, **dadurch gekennzeichnet, dass** der Drehpunkt (P) des Pedalhebels (1) und der Drehpunkt (M) des Elektromotors (4) identisch sind.

9. Kompaktes Pedalsystem nach einem der vorangehenden Ansprüche, **dadurch gekennzeichnet, dass** die Winkellage des Pedalhebels (1) durch einen Pedalsensor am Pedalhebel (1) und die Winkellage des Elektromotors (4) durch einen Motorsensor am Elektromotor (4) erfassbar ist.

10. Kompaktes Pedalsystem nach einem der vorangehenden Ansprüche, **dadurch gekennzeichnet, dass** an der Pedalrückholfeder (2) ein Überwachungselement (14) angeordnet ist, durch das die Funktion der Pedalrückholfeder (2) überwachbar ist.

11. Kompaktes Pedalsystem nach einem der vorangehenden Ansprüche, **dadurch gekennzeichnet, dass** die Motorrückholfeder (8) als Schenkelfeder ausgestaltet und zwischen der Antriebsscheibe (6) und dem Stator (12) angeordnet ist.

12. Kompaktes Pedalsystem nach einem der vorangehenden Ansprüche , **dadurch gekennzeichnet, dass** der Elektromotor (4) als bürstenloser Gleichstrommotor mit selbsthemmendem Getriebe ausgestaltet ist, wobei das selbsthemmende Getriebe zwischen dem Rotor (11) und der Antriebsscheibe (6) angeordnet ist.

13. Kompaktes Pedalsystem nach Anspruch 12, **dadurch gekennzeichnet, dass** die Antriebsscheibe (6) auf der Welle (13) drehbar gelagert ist und die Antriebsscheibe (6) mittels der Motorrückholfeder (8) mit dem selbsthemmenden Getriebe des Elektromotors (4) verbunden ist.

## Claims

1. A compact pedal system for controlling the speed in a motor vehicle, including a force readjusting device which is integrated in a housing (3), comprising
- a pedal lever (1) for realizing the driver's desire for speed, wherein the pedal lever (1) can be turned about a pivot (P) from a zero position (PN) of the pedal lever (1) to a final position (PE) of the pedal lever (1),
- a pedal return spring (2) capable of moving the pedal lever (1) to its zero position (PN),
- an electric motor (4) which can be turned about a pivot (M) from a zero position (MN) of the electric motor (4) to a final position (ME) of the electric motor (4), and which, in its energized state, is capable of exerting a readjusting force on the pedal lever (1) towards the zero position (PN) thereof, wherein the sense of rotation from the final position (PE), (ME) to the zero position (PN), (MN) is the same for the pedal lever (1) and the electric motor (4),
- a driving disc (6) which is connected to the electric motor (4) by means of a shaft (13) and exerts the readjusting force on the pedal lever (1) by means of a driving roller (7) arranged eccentrically on the driving disc (6), wherein the driving roller (7) is only in surface contact with the pedal lever (1) when the readjusting force (F) is exerted on the pedal lever (1),
- a motor return spring (8) for returning the electric motor (4) towards the zero position (MN) of the electric motor (4),
- a control unit (10) for controlling the electric motor (4),
**characterized in that**
the electric motor (4) comprises a rotor (11) and a stator (12), wherein the stator (12) is arranged on the shaft (13) of the electric motor (4) between the rotor (11) and the driving disc (6).

2. The compact pedal system according to claim 1, **characterized in that** the shaft (13) is supported in the stator (12) by means of a radial bearing, wherein the radial bearing extends substantially over the entire length of the stator (12) in order to be able to absorb large radial forces, which are caused by the shaft when a readjusting force is exerted on the pedal lever (1).

3. The compact pedal system according to claim 1 or 2, **characterized in that** the pedal return spring (2) and the motor return spring (8) force the pedal lever (1) towards its zero position (PN) when the electric motor (4) is not energized.

4. The compact pedal system according to any one of the preceding claims, **characterized in that** a slide bush (5) is arranged as a hysteresis element in the pivot (P) of the pedal lever (1).

5. The compact pedal system according to any one of the preceding claims, **characterized in that** an overload coupling is arranged on the electric motor (4), by means of which the vehicle driver can override the readjusting force.

6. The compact pedal system according to any one of the preceding claims, **characterized in that** an emergency means is arranged on the electric motor (4), by means of which the vehicle driver can override the readjusting force in case the electric motor is blocked.

7. The compact pedal system according to any one of the preceding claims, **characterized in that**, in case of low outside temperatures, the electric motor (4) can be energized for a short while at time intervals predefined by the control unit (10) or at random time intervals, by means of which the increased frictional losses in the electric motor (4) and in the pedal lever (1), which are caused by said low outside temperatures, can be compensated for.

8. The compact pedal system according to any one of the preceding claims, **characterized in that** the pivot (P) of the pedal lever (1) and the pivot (M) of the electric motor (4) are the same.

9. The compact pedal system according to any one of the preceding claims, **characterized in that** the angular position of the pedal lever (1) can be detected by a pedal sensor located on the pedal lever (1), and the angular position of the electric motor (4) can be detected by a motor sensor located on the electric motor (4).

10. The compact pedal system according to any one of the preceding claims, **characterized in that** a monitoring element (14) is arranged on the pedal return spring (2), by means of which the function of the pedal return spring (2) can be monitored.

11. The compact pedal system according to any one of the preceding claims, **characterized in that** the motor return spring (8) is designed as a helical torsion spring and is arranged between the driving disc (6) and the stator (12).

12. The compact pedal system according to any one of the preceding claims, **characterized in that** the electric motor (4) is designed as a brushless DC electric motor with self-locking gear, wherein the self-locking gear is arranged between the rotor (11) and the driving disc (6).

13. The compact pedal system according to claim 12, **characterized in that** the driving disc (6) is arranged so as to be rotatable on the shaft (13), and the driving disc (6) is connected to the self-locking gear of the electric motor (4) by means of the motor return spring (8).

## Revendications

1. Système de pédale compact pour la régulation de vitesse dans un véhicule automobile, avec un dispositif de rappel de force intégré dans un carter (3), comprenant
- un levier de pédale (1) pour convertir en vitesse le souhait du conducteur, le levier de pédale (1) pouvant pivoter autour d'un point de rotation (P) à partir d'une position zéro (PN) du levier de pédale (1) jusqu'à une position extrême PE du levier de pédale (1),
- un ressort de rappel de pédale (2), qui peut amener le levier de pédale (1) dans sa position zéro (PN),
- un moteur électrique (4) qui peut pivoter autour d'un point de rotation (M) à partir d'une position zéro (MN) du moteur électrique (4) jusqu'à une position extrême (ME) du moteur électrique (4) et qui, quand il est dans l'état alimenté en courant, peut exercer une force de rappel sur le levier de pédale (1) en direction de sa position zéro (PN), le sens de rotation respectif de la position extrême (PE), (ME) dans la position zéro (PN), (MN) étant identique pour le levier de pédale (1) et pour le moteur électrique (4),
- un disque d'entraînement (6), qui est raccordé au moteur électrique (4) au moyen d'un arbre (13) et qui exerce la force de rappel sur le levier de pédale (1) au moyen d'un galet d'entraînement (7) disposé de façon excentrée sur le disque d'entraînement (6), le galet d'entraînement (7) étant simplement plaqué contre le levier de pédale (1) lors de l'exercice de la force de rappel (F) sur le levier de pédale (1),
- un ressort de rappel de moteur (8) pour le rappel du moteur électrique (4) en direction de la position zéro (MN) du moteur électrique (4),
- une unité de commande (10) pour la commande du moteur électrique (4),
**caractérisé en ce que**
le moteur électrique (4) comprend un rotor (11) et un stator (12), le stator (12) étant disposé sur l'arbre (13) du moteur électrique (4) entre le rotor (11) et le disque d'entraînement (6).

2. Système de pédale compact selon la revendication 1, **caractérisé en ce que** l'arbre (13) est supporté dans le stator (12) au moyen d'un palier radial, le palier radial s'étendant très largement sur toute la longueur du stator (12) afin de pouvoir supporter des forces radiales les plus grandes possible qui sont provoquées par l'arbre quand une force de rappel est exercée sur le levier de pédale (1).

3. Système de pédale compact selon la revendication 1 ou 2, **caractérisé en ce que**, quand le moteur électrique (4) n'est pas alimenté en courant, le ressort de rappel de pédale (2) et le ressort de rappel de moteur (8) pressent le levier de pédale (1) en direction de sa position zéro (PN).

4. Système de pédale compact selon une des revendications précédentes, **caractérisé en ce que**, dans le point de rotation (P) du levier de pédale (1), il est disposé une douille coulissante (5) en tant qu'élément d'hystérésis.

5. Système de pédales compact selon une des revendications précédentes, **caractérisé en ce qu'**un accouplement de surcharge est disposé sur le moteur électrique (4), au moyen duquel la force de rappel peut être outrepassée par le conducteur du véhicule.

6. Système de pédales compact selon une des revendications précédentes, **caractérisé en ce qu'**un moyen d'urgence est disposé sur le moteur électrique (4), au moyen duquel la force de rappel peut être surmontée par le conducteur du véhicule en cas de blocage du moteur électrique.

7. Système de pédale compact selon une des revendications précédentes, **caractérisé en ce que**, en cas de températures extérieures basses, le moteur électrique (4) peut être alimenté en courant brièvement à des intervalles de temps prédéfinis par l'unité de commande (10) ou à intervalles arbitraires, ce qui fait que les pertes par frottement dans le moteur électrique (4) et le levier de pédale (1), qui sont accrues par les températures extérieures basses, peuvent être compensées.

8. Système de pédale compact selon une des revendications précédentes, **caractérisé en ce que** le point de rotation (P) du levier de pédale (1) et le point de rotation (M) du moteur électrique (4) sont identiques.

9. Système de pédale compact selon une des revendications précédentes, **caractérisé en ce que** la position angulaire du levier de pédale (1) peut être détectée par un capteur de pédale sur le levier de pédale (1), et **en ce que** la position angulaire du moteur électrique (4) peut être détectée par un capteur de moteur sur le moteur électrique (4).

10. Système de pédale compact selon une des revendications précédentes, **caractérisé en ce qu'**un élément de surveillance (14) est disposé sur le ressort de rappel de pédale (2) et permet de surveiller le fonctionnement du ressort de rappel de pédale (2).

11. Système de pédale compact selon une des revendications précédentes, **caractérisé en ce que** le ressort de rappel de moteur (8) est constitué en tant que ressort à branches et est disposé entre le disque d'entraînement (6) et le stator (12).

12. Système de pédale compact selon une des revendications précédentes, **caractérisé en ce que** le moteur électrique (4) est constitué en tant que moteur à courant continu sans balais avec transmission autobloquante, la transmission autobloquante étant disposée entre le rotor (11) et le disque d'entraînement (6).

13. Système de pédale compact selon la revendication 12, **caractérisé en ce que** le disque d'entraînement (6) est supporté de façon rotative sur l'arbre (13), et le disque d'entraînement (6) est raccordé à la transmission autobloquante du moteur électrique (4) au moyen du ressort de rappel de moteur (8).
